# EUROPEAN PATENT SPECIFICATION

(11) **EP 2 729 999 B1**
(45) Date of publication and mention of the grant of the patent: **25.11.2015**
(21) Application number: 12738225.7
(22) Date of filing: 03.07.2012
(51) Int. Cl.: H02G 3/32, H02G 3/04

(54) **CORRUGATE TUBE WITH CLAMP AND PRODUCTION METHOD OF THE SAME**
GEWELLTES ROHR MIT EINER KLEMME UND HERSTELLUNGSVERFAHREN DAFÜR
TUBE ONDULÉ MUNI DE COLLIER ET SON PROCÉDÉ DE FABRICATION

(30) Priority: 05.07.2011 JP 2011148851
(43) Date of publication of application: 14.05.2014
(60) Divisional application: 15001494.2
(73) Proprietor: Yazaki Corporation, Minato-ku Tokyo 108-8333 (JP)
(72) Inventor: OMURA, Takeyuki, Susono-shi Shizuoka 410-1107 (JP); KATSUMATA, Makoto, Susono-shi Shizuoka 410-1107 (JP); ISHIUCHI, Hiroshi, Susono-shi Shizuoka 410-1107 (JP); ICHIKAWA, Hiroshi, Susono-shi Shizuoka 410-1107 (JP); SUGIMOTO, Masahisa, Susono-shi Shizuoka 410-1107 (JP)
(74) Representative: Grünecker Patent- und Rechtsanwälte PartG mbB
(86) International application number: PCT/JP2012/004293
(87) International publication number: WO 2013/005416

(56) References cited:
- FR-A- 893 194
- FR-A1- 2 899 838
- FR-A3- 2 533 996
- GB-A- 2 239 302
- US-A- 6 129 120
- US-A1- 2002 033 269
- US-A1- 2009 014 203

## Description

### Technical Field

This invention relates to a corrugate tube with a clamp for, for example, fixing the corrugate tube to a vehicle body or the like with the locking clamp while a plurality of electric wires are inserted into the corrugate tube, and a production method of the corrugate tube with the clamp.

### Back ground Art

Conventionally, various corrugate tube structures are proposed for fixing the synthetic-resin-made corrugate tube receiving a plurality of electric wires (wiring harness) to a vehicle or the like with a locking clamp (also referred to as clip).

For example, in PTL 1 (not shown), it is described that while a clamp is extended vertically from a synthetic-resin-made plate, and the plate is fixed to a wiring harness with a tape, the clamp is inserted and locked into a hole of a vehicle body. The clamp is composed of a supporting column and locking blades projected to both sides in a parasol shape radially at a tip side of the supporting column.

In PTL 2 or PTLG (not shown), it is described that while a clamp is projected from an outer wall of a synthetic-resin-made banding band, and the banding band is fixed to an outer periphery of a wiring harness, the clamp is inserted and locked into a hole of a vehicle body.

In PTL 3 (not shown), it is described that while a clamp is projected from an outer wall of a synthetic-resin-made dividable fixture, and the fixture is fitted into a concave groove on an outer periphery of a synthetic-resin-made corrugate tube, the clamp is inserted and locked into a hole of a vehicle body. The corrugate tube is a harness-protecting tube with high flexibility by arranging alternately the concave grooves (valleys) and convex ribs (hills) in a circumferential direction.

Further, in PTL 4 (not shown), it is described that a synthetic-resin-made feeding corrugate tube connecting a fuel tank of a vehicle with a fill opening, which is not a harness protecting tube, includes: flexible bellows in the middle in a longitudinal direction; and a straight portion at both ends thereof.

Further, it is described that a production method of the corrugate tube includes the steps of: fixing a plurality of dividable molding dies to a pair of endless belts opposed to each other, in which each molding die is composed of a bellows molding die having a bellows-shaped circular concave, and a straight molding die having a flat molding wall;; and moving the molding dies by rotating the endless belts while pushing circularly thermoplastic resin material into the molding dies from an extruder.

A production method of a corrugate tube composed of only bellows (while heating the extruded resin in the molding die, the molding die is moved by a rotation of the belt) is described in PTL 5.

### Citation List

### Patent Literature

PTL 1: JP, A, 2007-255610
PTL 2: JP, A, 2002-310338
PTL 3: JP, A, 2002-199558
PTL 4: JP, A, 2010-260241
PTL 5: JP, A, 2003-294175
PTL 6: GB, A 2239302

### Summary of Invention

### Technical Problem

However, for example, in a case that while the conventional banding band with the clamp described in PTL 2 is fixed to the harness-protecting corrugate tube described in PTL 3, the clamp is inserted and locked into a hole of a vehicle body, there are problems that it takes a lot of trouble to attach the clamp to the corrugate tube afterwards, and that by displacing the clamp in a longitudinal direction or a radial direction of the corrugate tube, assembling workability of the corrugate tube to a vehicle is reduced. Further, there is a fear that after assembling the corrugate tube with a vehicle, for example, the clamp is loosened from the corrugate tube, or the bellows of the corrugate tube are too fastened with the banding band, thereby the bellows are deformed, and inner electric wires are damaged.

In view of the above problems, an object of the present invention is to provide a corrugate tube with a clamp and a production method of the same able to remove a fear about a damage of an electric wire or the like in a corrugate tube by a banding band, in addition, to remove a labor hour of attaching afterward the clamp to the corrugate tube, and to prevent the clamp from being displaced or loosening with respect to the corrugate tube.

### Solution to Problem

For attaining the object, according to the invention claimed in claim 1, there is provided a corrugate tube with a clamp integrally comprising a straight tube portion and a bellows tube portion,
wherein a locking clamp is individually provided on the straight tube portion.

When the clamp is individually provided, the clamp is disposed on the straight portion which is more flexible and more rigid than the bellows tube portion, so that the straight tube portion is prevented from being deformed when the clamp is inserted into a hole of a vehicle body or the like, or when the individual clamp is attached. The clamp is inserted into and locked with the hole of the vehicle body or the like, and at this time, a position gap between the clamp and the hole is absorbed by expansion and contraction of the bellows tube portion in a longitudinal direction of the tube (axial direction). The clamp which is individually provided includes: a supporting column projected from the straight tube portion in a straight tube portion direction; and a plurality of claws projected from the supporting column in a radial direction of the supporting column.

According to the invention claimed in claim 2, there is provided the corrugate tube with a clamp as claimed in claim 1,
wherein the straight tube portion which is provided with the clamp is thicker than the bellows tube portion.

According to the above configuration, the rigidity of the straight tube portion is increased, the fixing strength of the clamp with respect to the straight tube portion is increased, and when the clamp is inserted into and locked with the hole of the vehicle body or the like, the straight tube portion is prevented from being deformed, thereby insertion workability of the clamp into the hole of the vehicle body or the like is increased. Further, the attaching ability of the individual clamp to the straight tube portion is increased, and when the clamp is attached, the straight tube portion is prevented from being deformed.

According to the invention claimed in claim 3, there is provided the corrugate tube with a clamp as claimed in claim 1 or 2,
wherein a slit for inserting electric wires in a longitudinal direction of the tube is provided in an opposite direction of the clamp, and
wherein a wiring harness for a vehicle is composed of the slit together with a plurality of electric wires inserted into the slit.

According to the above configuration, the clamp is hardly affected by the reduction of the rigidity of the tube due to the slit for inserting the electric wires, thereby insertion ability and locking ability of the clamp with the hole of a vehicle or the like are increased.

According to the invention claimed in claim 4, there is provided the corrugate tube with a clamp as claimed in claim 3,
wherein a hole for branching wires is provided communicating with the slit.

According to the above configuration, while the electric wires are inserted into the corrugate tube via the slit, the branched electric wires are effectively guided out from the hole to the outside. Because the hole is positioned opposite to the clamp similar to the slit, the clamp is not affected by the reduction of the rigidity of the tube by the hole, and smoothly inserted into and locked with the hole of a vehicle body or the like.

According to the invention claimed in claim 5, there is provided the corrugate tube with a clamp as claimed in any one of claims 1 to 4,
wherein a hole is provided on the straight tube portion for fixing the individual clamp.

For example, a step or a peripheral groove of the supporting column of the individual clamp is inserted into and locked with the hole of the straight tube portion, and the clamp is positioned at the hole.

According to the invention claimed in claim 6, there is provided the corrugate tube with a clamp as claimed in any one of claims 1 to 5,
wherein a radius of a hill portion of the bellows tube portion is sufficiently larger than a radius of a valley portion of the bellows tube portion, and a thickness of the hill portion is gradually smaller as the bellows tube portion extends toward a tip.

According to the above configuration, the flexibility of the bellows tube portion is increased, and the bellows tube portion is smoothly bent in a small bend radius. The straight tube portions continued to both ends of the bellows tube portion are arranged, for example, in substantially V-shape along a wall surface of a vehicle body or the like, and the clamps of the straight tube portions are allowed to be inserted into the holes of the vehicle body or the like.

### Advantageous Effects of Invention

When the locking clamp is individually provided on the straight tube portion, because the high rigid straight portion having lower flexibility than the bellows tube portion is hardly deformed even if the straight tube portion is fastened by the band portion of the clamp, the electric wires in the corrugate tube is prevented from being damaged.

According to the invention claimed in claim 2, for example, when the clamp is inserted into and locked with a hole of a vehicle body or the like, the straight tube portion at a root of the clamp is further hardly deformed, thereby the insertion workability of the clamp into the hole of a vehicle body or the like is increased, and the electric wires inserted into the corrugate tube are prevented from being damaged.

According to the invention claimed in claim 3, while the electric wires are inserted into the corrugate tube via the slit, the clamp is smoothly inserted into and locked with the hole of a vehicle body or the like unaffected by the reduction of the rigidity of the tube due to the slit.

According to the invention claimed in claim 4, the branched wires are effectively and smoothly guided out via the slit to the hole, and the clamp is smoothly inserted into and locked with the hole of a vehicle or the like unaffected by the reduction of the rigidity of the tube due to the hole.

According to the invention claimed in claim 5, the individual clamp is positioned in a longitudinal direction of the corrugate tube by the groove or the hole of the straight tube portion.

According to the invention claimed in claim 6, because the flexibility of the bellows tube portion is increased, the clamp provided on the straight tube portion continued to the bellows tube portion is easily positioned at the hole of a vehicle body or the like, and smoothly inserted into and locked with the hole.

### Brief Description of Drawings

[fig. 1] Fig. 1 is a perspective view showing a first embodiment of a corrugate tube with a clamp according to the present invention.
[fig.2]Fig. 2 is a perspective view showing an embodiment of assembling the corrugate tube with a clamp.
[fig.3]Fig. 3 is a perspective view showing a modified embodiment of the corrugate tube with a clamp.
[fig.4A]Fig. 4A is a front view showing an embodiment of a bellows tube portion of the corrugate tube with a clamp.
[fig.4B]Fig. 4B is a front view showing an embodiment of a bellows tube portion of the corrugate tube with a clamp.
[fig.5]Fig. 5 is a perspective view showing a first embodiment of a production apparatus and a production method of the corrugate tube with a clamp.
[fig.6A]Fig. 6A is a front view showing a main part of the production apparatus.
[fig.6B]Fig. 6B is a front view showing a die block of the production apparatus.
[fig.6C]Fig. 6C is a perspective view showing the die block.
[fig.7A]Fig. 7A is a front view showing in succession a process flow of another embodiment of the production apparatus and the production method of the corrugate tube with a clamp.
[fig.7B]Fig. 7B is a front view showing in succession a process flow of another embodiment of the production apparatus and the production method of the corrugate tube with a clamp. (A view within a flame is an enlarged sectional view.)
[fig.7C]Fig. 7C is a front view showing in succession a process flow of another embodiment of the production apparatus and the production method of the corrugate tube with a clamp.
[fig.7D]Fig. 7D is a front view showing in succession a process flow of another embodiment of the production apparatus and the production method of the corrugate tube with a clamp.
[fig.7E]Fig. 7E is a front view showing in succession a process flow of another embodiment of the production apparatus and the production method of the corrugate tube with a clamp.
[fig. 8] Fig. 8 is a perspective view showing a second embodiment of the corrugate tube with a clamp.
[fig.9]Fig. 9 is a perspective view showing an embodiment of a clamp used in the second embodiment.
[fig.10]Fig. 10 is a front view showing an embodiment of the die block of the production apparatus of the corrugate tube with a clamp used in the second embodiment.
[fig.11]Fig. 11 is a sectional view showing another embodiment of the die block used in the second embodiment.
[fig.12]Fig. 12 is an exploded perspective view showing a modified embodiment of the corrugate tube with a clamp.

### Description of Embodiments

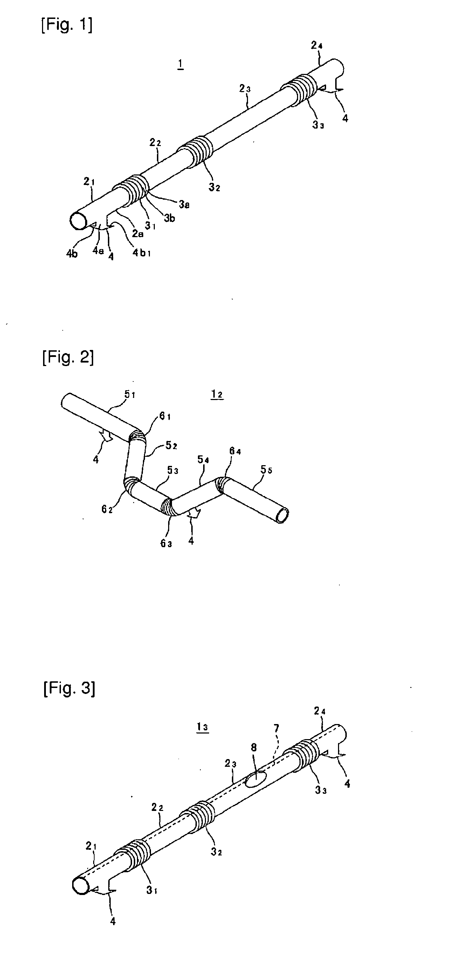

Fig. 1 shows a first embodiment of a corrugate tube with a clamp according to the present invention.

This corrugate tube with a clamp 1 is made of synthetic resin, and composed of a plurality of straight tube portions 2 (2₁ to 2₄), bellows tube portions 3 (3₁ to 3₃) integrally connected and arranged between the straight tube portions 2₁ to 2₄, and locking clamps 4 integrally provided on the required straight tube portions 2₁, 2₄.

The corrugate tube with a clamp 1 shown in Fig. 1 is composed of a short first straight tube portion 2₁, a short first bellows tube portion 3₁ continued to the first straight tube portion 2₁, a short second straight tube portion 2₂ continued to the first bellows tube portion 3₁, a short second bellows tube portion 3₂ continued to the second straight tube portion 2₂, a long third straight tube portion 2₃ continued to the second bellows tube portion 3₂, a short third bellows tube portion 3₃ continued to the third straight tube portion 2₃, and a short fourth straight tube portion 2₄ continued to the third bellows tube portion 3₃.

In this embodiment, the lengths of the bellows tube portions 4 are substantially the same, the lengths of the first to third straight tube portions 2₁ to 2₃ are longer than those of the bellows tube portions 3, and the length of the fourth straight tube portion 2₄ is substantially the same as the lengths of the bellows tube portions 3. The straight tube portions 2 and the bellows tube portions 3 are respectively formed in a circular sectional shape. Outer diameters of the straight tube portions 2 are smaller than outer diameters of the bellows tube portions 3. The outer diameters of the straight tube portions 2 are substantially the same, and the outer diameters of the bellows tube portions 3 are substantially the same. In an initial condition shown in Fig. 1 that the bellows tube portions 3 are not bent, the straight tube portions 2 and the bellows tube portions 3 are arranged coaxial and straight.

In the embodiment shown in Fig. 1, locking clamps 4 are respectively provided on the first and fourth straight tube portions 2₁, 2₄, namely, the straight tube portions 2 at both front and rear ends. Each clamp 4 is projected from an outer wall 2a of each straight tube portion 2 in a radial direction. Each clamp 4 is composed of a supporting column 4a perpendicular to and continued integrally with the outer wall 2a of each straight tube portion 2, and a pair of elastic locking claws 4b integrally projected left and right or back and forth at a tip side of the supporting column 4a (the clamp 4 is shown simplistically).

A shape of the clamp 4 is an existing shape, and a plurality of the elastic claws 4b may be arranged in a radial fashion but the pair of claws 4. In any way, each claw 4b has a locking wall 4b1 for inserting into a circular hole of a not-shown vehicle body, panel, or the like, and for engaging with a rear wall of the vehicle body, panel, or the like to prevent the clamp 4 from falling out.

Each straight tube portion 2 is hard and high rigidity, and maintains a straight shape in a normal routing. Each bellows tube portion 3 is bendable from side to side, up and down (360 degree range) due to the bellows shape. Preferably, the straight tube portion 2 is thicker than the bellows tube portion 3 for maintaining the straight shape, for fixing the clamp 4 integrally to the straight tube portion 2, and for preventing the straight tube portion from being deformed when the clamp 4 is inserted into (pushed into) the hole of a vehicle body or the like.

Due to expansion and contraction of the flexible bellows tube portion 3, a position gap with respect to the hole of a vehicle body or the like in a longitudinal direction of the tube is absorbed, thereby the clamp 4 is effectively inserted into and locked with the hole of a vehicle body or the like.

Similar to bellows portions of an existing corrugate tube, the bellows tube portion 3 is composed of concave grooves (valley portions) 3a and convex projections (hill portions) 3b arranged alternately in the longitudinal direction of the tube. Not-shown inner peripheral walls of the concave grooves 3a and the convex projections 3b are in the bellows shape similar to outer peripheral walls. Preferably, a straight slit (not shown) in the longitudinal direction is provided on the corrugate tube with a clamp 1 180 degree opposite to the clamp 4 for inserting a plurality of not-shown electric wires (wiring harness).

Fig. 2 shows the corrugate tube with a clamp 1₂ assembled on a vehicle body or the like by bending three-dimensionally.

The numbers of the straight tube portions 5 and the bellows tube portions 6 of the corrugate tube with a clamp 1₂ are respectively increased one in comparison with the embodiment shown in Fig. 1. The straight tube portions 5 and the bellows tube portions 6 are alternately arranged in the longitudinal direction of the tube. The locking clamps 4 are provided on the required straight tube portions 5. The configurations of the straight tube portions 2, 5 and the bellows tube portions 3, 6 in Figs. 1 and 2 are the same (for the sake of convenience, the reference signs are changed in the explanations).

In Fig. 2, explaining from the left side, a first straight tube portion 5₁ is arranged horizontally, a first bellows tube portion 6₁ continued to the first straight tube portion 5₁ is bent obliquely downward, a second straight tube portion 5₂ continued to the first bellows tube portion 6₁ is inclined right-side down, a second bellows tube portion 6₂ continued to the second straight tube portion 5₂ is bent horizontally, a third straight tube portion 5₃ continued to the second bellows tube portion 6₂ is arranged horizontally, a third bellows tube portion 6₃ continued to the third straight tube portion 5₃ is bent upward, a fourth straight tube portion 5₄ continued to the third bellows tube portion 6₃ is inclined right-side up, a fourth bellows tube portion 6₄ continued to the fourth straight tube portion 5₄ is bent horizontally, and a fifth straight tube portion 5₅ continued to the fourth bellows tube portion 6₄ is arranged horizontally.

In the embodiment shown in Fig. 2, the clamps 4 are respectively provided on the first and fourth straight tube portions 5₁, 5₄. The clamps 4 can be arranged properly on the required straight tube portions 5 corresponding to positions of holes of a vehicle body or the like. The straight tube portions 5 can be routed along a wall surface of a vehicle body or the like by bending the bellows tube portions 6 in desired directions corresponding to a three-dimensional curved wall surface of a vehicle body or the like.

A plurality of not-shown electric wires (wiring harness) is previously inserted into an inside of the corrugate tube with a clamp 1₂. When the clamp 4 at an outer wall of the corrugate tube with a clamp 1₂ is inserted into and locked with the hole on a wall surface of a vehicle body or the like, the wiring harness is routed in a three-dimensional shape along the wall surface of a vehicle body or the like, and completely protected from an interference with an outside by the corrugate tube with a clamp 1₂.

Fig. 3 shows a modified embodiment of the corrugate tube with a clamp in Fig. 1. The same components as Fig. 1 are denoted by the same reference signs, and a detailed explanation is omitted.

This corrugate tube with a clamp 1₃ is provided with a straight slit 7 in a longitudinal direction of the tube and 180 degree opposite to the clamp 4, and the straight tube portion 2 is provided with a hole 8 for branching the wiring harness communicating with the slit 7.

The hole 8 in this embodiment is formed circular or oval, and disposed 180 degree opposite to the clamp 4. The number of the holes 8 is properly set corresponding to the number of the not-shown branched wires (branched harnesses). Because the hole 8 is provided on the hard straight tube portion 2, even when the branched wires are pulled in a radial direction, the hole 8 is not deformed, and a branch position is correctly maintained.

The clamps 4 in this embodiment are provided on the straight tube portions 2₁, 2₄ at front and rear ends in the longitudinal direction of the tube. However, the clamps 4 may be provided on not limited to the ends of the straight tube portions 2, but on the straight tube portions 2₂, 2₃ at the middle portions in the longitudinal direction. Further, the hole 8 for branching the harness may be disposed not limited to 180 degree opposite to the clamp 4 together with the slit 7, but one or a plurality of holes 8 may be disposed 90 degree relative to the slit 4.

When the corrugate tube with a clamp 1₂ of Fig. 2 is provided with the hole 8 for branching the harness, the branched wires are guided out from the hole 8 disposed 90 degree with respect to the clamp 4 or the neighbor, and routed along the wall surface of a vehicle body or the like, or the branched wires are guided out from the hole 8 disposed 180 degree opposite to the clamp 4 in a direction crossing the wall surface of a vehicle body or the like.

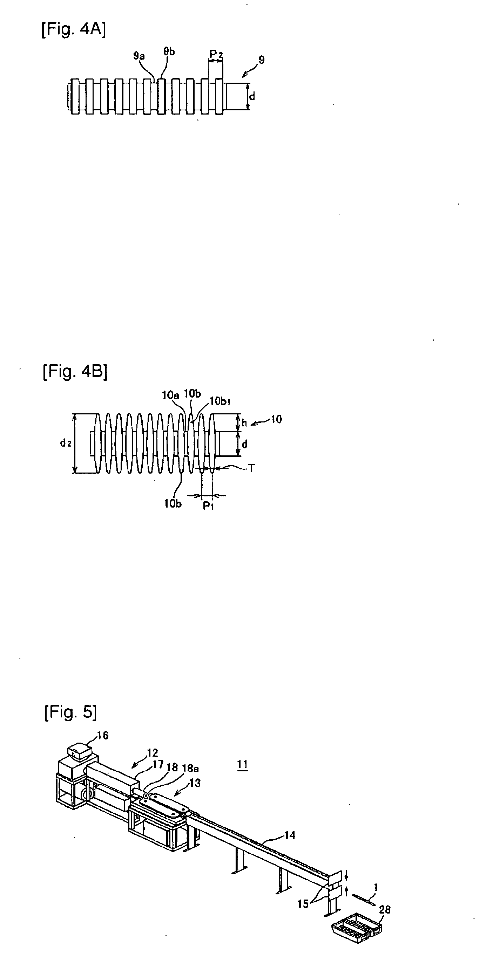

Fig. 4A shows a shape of a bellows portion 9 of an existing corrugate tube, and concave grooves (valley portions) 9a and convex projections (hill portions) 9b are continued in a rectangular wave shape in the longitudinal direction of the tube. The corrugate tubes with a clamp 1, 1₂, 1₃ of Figs. 1 to 3 may include the bellows portion 9 having the shape shown in Fig. 4. However, as shown in Fig. 4B, by using a bellows tube portion 10 of which convex projections (hill portions) are projected higher than the existing convex projections (Fig. 4A), the flexibility of the bellows tube portions 3, 6 of the corrugate tube with a clamp 1, 1₂, 1₃ is increased.

A projection height "h" of a convex projection (hill portion) 10b in this embodiment is larger than a half of an outer diameter "d" of a concave groove (valley portion) 10a. An outer diameter "d₂" of the convex projection (hill portion) 10b is sufficiently larger than the outer diameter "d" of the concave groove (valley portion) 10a. Outer diameters "d" of the concave grooves 9a, 10a in Figs. 4A, 4B are the same. A projecting tip 10b₁ of the convex projection 10b in Fig. 4B is not in a rectangular sectional shape, but in substantially a V-shaped or inverted V-shaped sectional shape. A thickness "T" of the convex projection 10b is gradually reduced in a curved taper shape as the convex projection 10b extends toward the tip.

A pitch "P1" of the convex projection 10b is smaller than a pitch "P2" of the existing convex projection 9b. The convex projections 10b are disposed close to each other in the longitudinal direction of the tube. Thereby, the flexibility of the bellows tube portion 10 (3, 6) is increased. By increasing the flexibility of the bellows tube portion 10 (3, 6), namely, making the bellows tube portion 10 (3, 6) bendable in a large angle, the straight tube portions 2, 5 which are not bent continued to the bellows tube portions 3, 6 are routed more flexibly to a vehicle body or the like. When a bending direction of the bellows tube portion 10 (3, 6) is regulated, the convex projection 10b at an inside bend may be lower, the convex projection 10b at an outside bend may be higher.

Figs. 5 to 6C show a first embodiment of a production method and a production apparatus of the corrugate tube with a clamp.

As shown in Fig. 5, this production apparatus 11 of the corrugate tube with a clamp includes: a resin-extruding portion 12; a tube-molding portion 13 continued to the resin-extruding portion 12; a tube-cooling portion 14 continued to the tube-molding portion 13; and a tube-cutting portion 15 disposed at an end of the tube-cooling portion 14.

The resin-extruding portion 12 includes: a hopper 16 for inputting resin material; a horizontal extruding main body 17 continued to the hopper 16; and a die 18 projected to a front end of the extruding main body 17. The die 18 has a circular slit shaped resin material extrusion outlet 18a. The resin material extrusion outlet 18a is inserted into an inlet of the tube-molding portion 13.

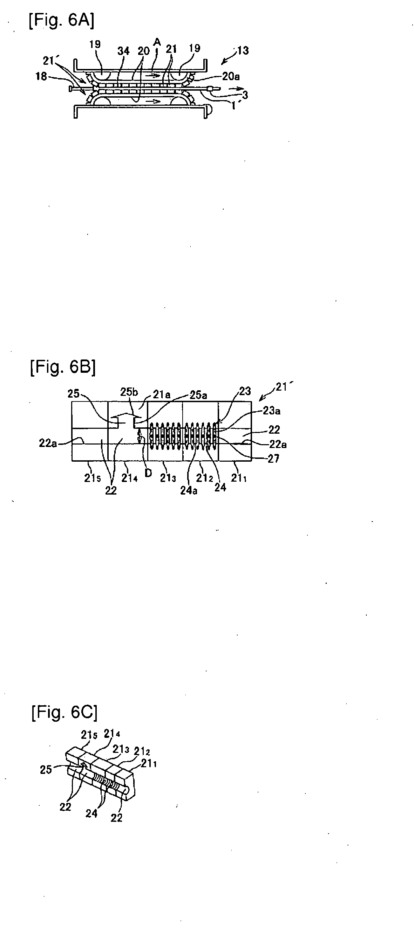

As shown in Fig. 6A, the tube-molding portion 13 includes: a left and right pair of endless belts 20 each rotationally driven by a front and rear pair of timing pulleys 19 in an existing fashion; and a plurality of die blocks 21 fixed in a manner facing left and right to the endless belts 20. The left and right die blocks 21 compose a left and right pair of die block group 21'.

As shown in a front view of Fig. 6B and a perspective view of Fig. 6C, the die blocks 21 are closely attached to each other without a gap in a back-and-forth direction. A front side die block 21₁ includes a horizontal straight semicircular sectional groove 22 for forming the straight tube portion. Two middle side die blocks 21₂, 21₃ continued to the front side die block 21₁ include peripheral grooves 23a composing a convex and concave shape (wave shape) portion 23 disposed in an inner periphery of a horizontal and semicircular sectional groove 24. A rear side die block 21₄ continued to the middle side die block 21₃ includes a halved groove 25 for forming an upward clamp communicating with the horizontal straight semicircular sectional groove 22 for forming the straight tube portion. A die block 21₅ continued to a rear side of the rear side die block 21₄ includes the horizontal straight semicircular sectional groove 22.

The convex and concave shape portion 23 of Fig. 6B for foiming the bellows tube portion substantially corresponds to the highly projected convex projection 10b of the bellows tube portion 10 in Fig. 4B. The convex and concave shape portion 23 respectively provided with a vacuum hole 27 in a radial direction.

When the left and right pairs of die blocks 21 facing each other are connected, a circular sectional hole (22) for forming the straight tube portion, a hole (24) of which inner periphery is a concave and convex shape for forming the bellows tube portion are assembled. The holes 22, 24 are penetrated back and forth, and the small hole 25 is not penetrated.

In Fig. 5, while a molten soft tubular thermoplastic resin material is guided from the die 18 to the tube-molding portion 13, the endless belts 20 of the tube-molding portion 13 in Fig. 6A are rotated forward as an arrow A to move the die blocks 21 forward. The soft tubular resin material 34 guided from the die 18 is closely attached to the inner peripheral walls 22a, 24a of the circular sectional holes 22, 24 of the die blocks 21 to form the straight tube portions 2, 5 and the bellows tube portions 3, 6 and to form the clamps 4 projected from outer walls of the straight tube portions 2, 5.

The die blocks 21 are separated left and right (opened) at a front side 20a of the endless belts 20, and the molded tube portion 1' is fed forward, cooled and hardened at the gutter-shaped tube-cooling portion 14 in Fig. 5, cut in a required length by upper and lower cutter of the tube-cutting portion 15, and received in a pallet 28 as a product 1. The slit 7 for inserting the harness in the longitudinal direction of the corrugate tube 1₃ with a clamp is, for example, cut by a vertical cutter provided on a not-shown bottom wall side of the tube-cooling portion 14 shot of the tube-cutting portion 15. In the corrugate tube 1₃ with a clamp, the clamp 4 is disposed upside, and the slit 7 is disposed downside.

The hole 8 for blanching wires of the corrugate tube 1₃ with a clamp in Fig. 3 is formed by, for example, providing not-shown semicircular-column-shaped divided bosses for forming the hole movably back and forth on the left and right die blocks 21 in Fig. 6B, by stopping temporarily the feed of the endless belts 20 upon closing the die blocks 21 after the resin material is fed, by moving forward (projecting) a column-shaped boss composed of the divided bosses to make the circular hole 8, and by moving backward the boss and resuming the feed of the endless belts 20. Further, the hole 8 may be formed in a downstream process.

Even when a rotation speed of the endless belts 20, namely, a feeding speed of the die blocks 21 is constant, for example, by selectively changing (enlarging) an inner diameter "D" of the hole 22 of the required die block 21₄ for forming the straight tube portion with respect to an inner diameter of the hole 24 of the die block 21₂ for forming the bellows tube portion, the thickness of the straight tube portions 2, 5 is increased, thereby the rigidity of the straight tube portions 2, 5 is increased, namely, the fixing strength of the clamp 4 to the straight tube portions 2, 5 is increased. When the feeding speed of the endless belts 20 is constant, the hole 8 for branching wires is formed in the downstream process.

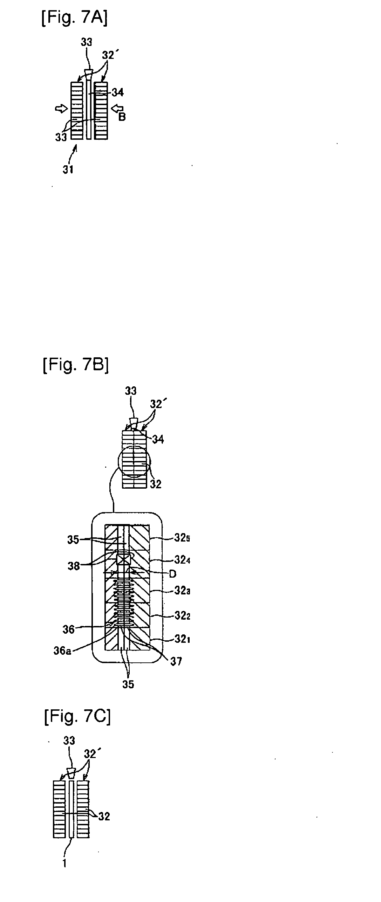

Figs. 7A to 7E show another embodiment of the production apparatus and the production method of the corrugate tube with a clamp.

This production apparatus of the corrugate tube with a clamp 31 is a shorter blow molding machine, and as shown in Fig. 7A, includes a left and right pair of facing die block group 32' composed of a plurality of die blocks 32 arranged parallel to each other in a vertical direction. The production method includes the steps of: supplying (feeding) the molten soft tubular thermoplastic resin material 34 from a downward nozzle (die) 33 between the left and right opened die block group 32'; closing the left and right die block group 32' as shown in Fig. 7B; injecting compressed air to an inside of the tubular resin material 34 from the nozzle 33; molding the corrugate tube with a clamp 1 between the die block group 32'; opening the die block group 32' as shown in Fig. 7C; and picking up the corrugate tube with a clamp 1.

As shown in the enlarged sectional view of Fig. 7B, the die blocks 32 are closely attached to each other without any gap vertically in a closed state. A bottom side die block 32₁ includes a circular sectional hole (35) composed of left and right vertical straight semicircular sectional grooves 35 for forming the straight tube portion. Middle side die blocks 32₂, 32₃ include peripheral grooves 36a composing a convex and concave shape (wave shape) portion 36 for forming the bellows tube portion on an inner periphery of a circular sectional hole (37) composed of left and right vertical semicircular sectional grooves 37. An up side die block 32₄ continued to the middle side die block 32₃ includes a small hole (38) composed of left and right halved small grooves 38 for forming a laterally-facing (front sided) clamp communicating with a hole (35) composed of left and right vertical straight semicircular sectional grooves 35. A die block 32₅ continued to an upside of the upside die block 32₄ includes the hole (35) composed of left and right vertical straight semicircular sectional grooves 35.

After the resin material 34 is supplied (fed) in Fig. 7A, as shown by an arrow B, the die block group 32' is closed. Then, after cooling, as shown in Fig. 7C, the die block group 32' is opened to complete the corrugate tube as a product.

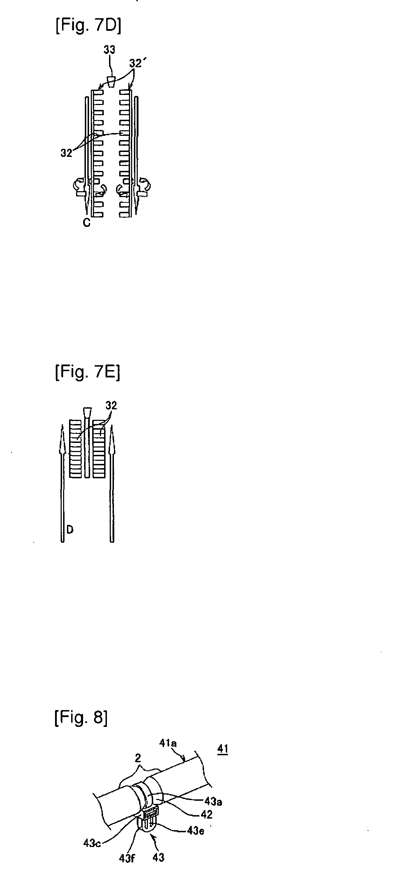

Corresponding to types (part number) of the corrugate tube, as shown in Fig. 7D, the positions of the straight tube portions 2, the bellows tube portions 3, and the clamps 4 are changed by separating the die blocks 32 downward as shown by an arrow C while the die block group 32' is opened, and by replacing the positions of the die blocks 32 upside down. As shown in Fig. 7E, the die blocks 32 are joined upward as shown in an arrow D, and the resin material 34 is supplied (fed) similar to Fig. 7A, and in an order of Figs. 7B to 7C, the corrugate tube is molded

The slit 7 for inserting the harness in the longitudinal direction of the corrugate tube with a clamp 1₃ of Fig. 3 is made by, for example, cutting the corrugate tube ejected from the blow molding machine 31 in the longitudinal direction with a not-shown cutter.

The hole 8 for branching the wires of the corrugate tube with a clamp 1₃ of Fig. 3 is made, for example, by providing not-shown semicircular-column-shaped divided bosses for forming the hole on the left and right die blocks 32 in Fig. 7A, and by closing the die blocks 32 in Fig. 7B to join the divided bosses into a column-shaped boss, and to form the circular hole 8 with the boss.

For example, by selectively changing (enlarging) an inner diameter "D" of the hole 35 of the required die block 32₄ for forming the straight tube portion with respect to an inner diameter of the hole 37 of the die block 32₂ for forming the bellows tube portion, the thickness of the straight tube portions 2, 5 is increased, thereby the rigidity of the straight tube portions 2, 5 is increased, namely, the fixing strength of the clamp 4 to the straight tube portions 2, 5 is increased. Similarly, by reducing the inner diameter "D" of the hole 35 of the required die block 32₄ for forming the straight tube portion with respect to the inner diameter of the hole 37 of the die block 32₂ for forming the bellows tube portion, the thickness of the straight tube portions 2, 5 is thinner than the thickness of the bellows tube portions 3, 6.

In the above embodiments, as the resin material for the corrugate tube, for example, polypropylene and nylon are suitable. By changing the resin material corresponding to a position where the corrugate tube with a clamp 1 is used in a vehicle, the cormgate tube adapts to the heat life temperature which is varied according to locations in a vehicle. The heat life temperature is an upper limit temperature at which the product has no problem as the product after exposed at this temperature for 10000 hours. For example, the heat life temperature of polypropylene is 95 degrees C, and the heat life temperature of nylon is 125 degrees C.

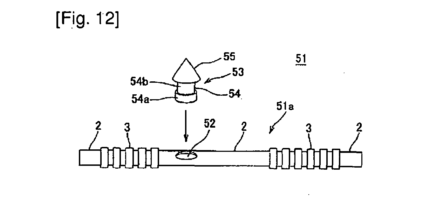

Fig. 12 shows the embodiment of corrugate tube with a clamp of which the clamp is fitted afterward. In this corrugate tube with a clamp 51, the straight tube portion 2 of a tube main body 51a is provided with a hole 52 in a radial direction, and a supporting column 54 of an individual clamp 53 is fitted and fixed to the hole 52.

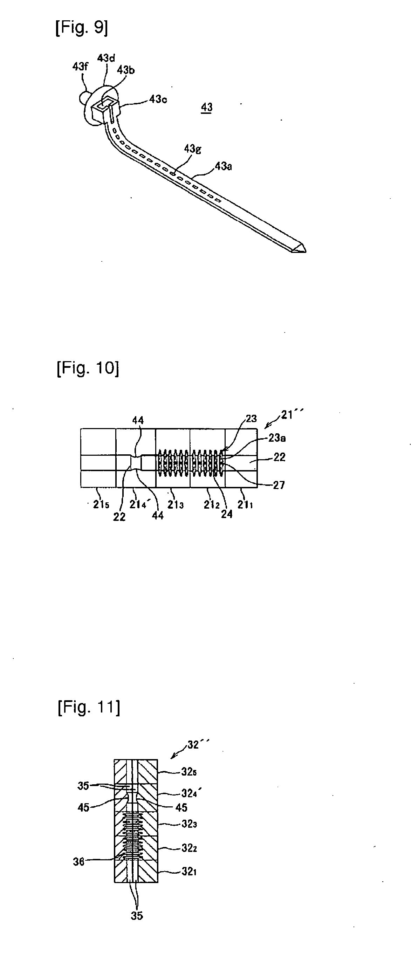

The clamp 53 is composed of the supporting column 54, and a claw 55 provided at a tip of the supporting column 54. The supporting column 54 is composed of a short large-diameter portion 54a at a base end side, and a long small-diameter portion 54b near the claw 55. For example, the large-diameter portion 54a is pushed into the hole 52 of the straight tube portion 2, and the small-diameter portion 54b is projected outside from the hole 52. It is also possible to provide a dish-shaped spring (reference sign 43d in Fig. 9) on the small-diameter portion 54b near the large-diameter portion 54a, to push the large-diameter portion 54a into the hole 52, to make a small-diameter portion between the large-diameter portion 54a and the spring penetrate the hole 52, and to make a rear wall of the spring abut on an outer wall of the straight tube portion 2 as a stopper wall.

The hole 52 is formed by a projection of a resin-molding die block or by a drill processing similar to the hole 8 for branching the wires in the embodiment of Fig. 3. Preferably, the hole 52 is provided on a position different from the slit 7 in the longitudinal direction of the tube in Fig. 3 (for example, 180 degrees opposite side).

The tube main body 51a is composed of a center long straight tube portion 2, bellows tube portions 3 at both front and rear sides in a longitudinal direction of the long straight tube portion 2, and short straight tube portions 2 at end sides continued to the bellows tube portions 3. A hole 52 for fitting the clamp is provided near an end of the center long straight tube portion 2. Positions, lengths, and shapes of the straight tube portions 2 and the bellows tube portions 3 can be changed properly. The position of the hole 52 can be also changed properly on the straight tube portion 2.

### Industrial Applicability

The corrugate tube with a clamp according to the present invention can be used for assembling the tube effectively and smoothly on a three-dimensionally curved wall surface of a vehicle body or the like while inserting a plurality of line-shaped objects such as electric wires, optical fibers, or pipes for supplying water.

### Reference Signs List

- 1, 1₂, 1₃, 41, 51: corrugate tube with a clamp
- 2, 5: straight tube portion
- 3, 6: bellows tube portion
- 4: integral clamp
- 7: slit
- 8: hole for branching wires
- 10a: valley portion
- 10b: hill portion
- 21, 32: die block
- 22, 35: groove for forming the straight tube portion
- 24, 37: groove for forming the bellows tube portion
- 34: resin material
- 42: groove
- 43, 51: individual clamp
- 52: hole
- T: thickness of the hill portion

## Claims

1. A corrugate tube with a clamp (1) integrally comprising a straight tube portion (2, 5) and a bellows tube portion (3, 6),
wherein a locking clamp (4, 53) is individually provided on the straight tube portion (2, 5),
**characterized in that**
a hole (52) is provided on the straight tube portion (2) for fixing the individual clamp (53).

2. The corrugate tube with a clamp (1) as claimed in claim 1,
wherein the straight tube portion (2, 5) which is provided with the clamp (4) is thicker than the bellows tube portion (3, 6).

3. The corrugate tube with a clamp (1₃) as claimed in claim 1 or 2,
wherein a slit (7) for inserting electric wires in a longitudinal direction of the tube is provided in an opposite direction of the clamp (4), and
wherein a wiring harness for a vehicle is composed of the slit (7) together with a plurality of electric wires inserted into the slit (7).

4. The corrugate tube with a clamp (1₃) as claimed in claim 3,
wherein a hole (8) for branching wires is provided communicating with the slit (7).

5. The corrugate tube with a clamp (1) as claimed in any one of claims 1 to 4,
wherein a radius (d₂) of a hill portion (10b) of the bellows tube portion (3, 6) is sufficiently larger than a radius (d) of a valley portion (10a) of the bellows tube portion (3,6), and a thickness (T) of the hill portion (10b) is gradually smaller as the bellows tube portion (3, 6) extends toward a tip.

6. The corrugate tube with a clamp (1) as claimed in any one of claims 1 to 5,
wherein the bellows tube portions (3,6) are respectively arranged in between a plurality of straight tube portions (2,5), and the clamps (4) are provided on required straight tube portions (2,5).

## Patentansprüche

1. Ein gewelltes Rohr mit einer Klemme (1), das einstückig einen geraden Rohrabschnitt (2, 5) und einen balgartigen Rohrabschnitt (3, 6) beinhaltet,
wobei eine Verriegelungsklemme (4, 53) einzeln an dem geraden Rohrabschnitt (2, 5) bereitgestellt ist, **dadurch gekennzeichnet, dass**
ein Loch (52) an dem geraden Rohrabschnitt (2) zum Fixieren der einzelnen Klemme (53) bereitgestellt ist.

2. Das gewellte Rohr mit einer Klemme (1), wie in Anspruch 1 beansprucht, wobei der gerade Rohrabschnitt (2,5), der mit der Klemme (4) bereitgestellt ist, dicker ist als der balgartige Rohrabschnitt (3,6).

3. Das gewellte Rohr mit einer Klemme (1₃), wie in Anspruch 1 oder 2 beansprucht, wobei ein Schlitz (7) zum Einsetzen von elektrischen Drähten in einer Längsrichtung des Rohrs in einer gegenüberliegenden Richtung der Klemme (4) bereitgestellt ist, und wobei ein Kabelstrang für ein Fahrzeug aus dem Schlitz (7) zusammen mit einer Vielzahl von elektrischen Drähten, die in den Schlitz (7) eingesetzt sind, aufgebaut ist.

4. Das gewellte Rohr mit einer Klemme (1₃), wie in Anspruch 3 beansprucht, wobei ein Loch (8) zum Abzweigen von Drähten bereitgestellt ist, das mit dem Schlitz (7) kommuniziert.

5. Das gewellte Rohr mit einer Klemme (1), wie in einem der Ansprüche 1 bis 4 beansprucht, wobei ein Radius (d₂) von einem Hügelabschnitt (10b) des balgartigen Rohrabschnitts (3, 6) ausreichend größer ist als ein Radius (d) eines Talabschnitts (10a) des balgartigen Rohrabschnitts (3, 6), und eine Dicke (T) des Hügelabschnitts (10b) fortschreitend zu einer Spitze des balgartigen Rohrabschnitts (3, 6) kleiner wird.

6. Das gewellte Rohr mit einer Klemme (1), wie in einem der Ansprüche 1 bis 5 beansprucht, wobei balgartige Rohrabschnitte (3, 6) zwischen einer Vielzahl von geraden Rohrabschnitten (2, 5) entsprechend angeordnet sind und die Klemmen (4) an erforderlichen geraden Rohrabschnitten (2, 5) bereitgestellt sind.

## Revendications

1. Tube ondulé muni d'un collier (1) comprenant en une seule pièce une partie de tube rectiligne (2, 5) et une partie de tube en soufflet (3, 6),
dans lequel un collier de verrouillage (4, 53) est prévu de façon individuelle sur la partie de tube rectiligne (2, 5),
**caractérisé en ce que**
un trou (52) est prévu sur la partie de tube rectiligne (2) pour fixer le collier individuel (53).

2. Tube ondulé muni d'un collier (1) selon la revendication 1,
dans lequel la partie de tube rectiligne (2, 5) qui est munie du collier (4) est plus épaisse que la partie de tube en soufflet (3, 6).

3. Tube ondulé muni d'un collier (1₃) selon la revendication 1 ou 2,
dans lequel une fente (7) pour insérer des fils électriques dans la direction longitudinale du tube est prévue dans la direction opposée à celle du collier (4), et
dans lequel un faisceau de fils pour un véhicule est constitué de la fente (7) ainsi que d'une pluralité de fils électriques insérés dans la fente (7).

4. Tube ondulé muni d'un collier (1₃) selon la revendication 3,
dans lequel un trou (8) pour la distribution de fils est prévu en communication avec la fente (7).

5. Tube ondulé muni d'un collier (1) selon l'une quelconque des revendications 1 à 4,
dans lequel le rayon (d₂) d'une partie de colline (10b) de la partie de tube en soufflet (3, 6) est suffisamment plus grand que le rayon (d) de la partie de vallée (10a) de la partie de tube en soufflet (3, 6), et l'épaisseur (T) de la partie de colline (10b) se réduit progressivement à mesure que la partie de tube en soufflet (3, 6) s'étend vers une extrémité.

6. Tube ondulé muni d'un collier (1) selon l'une quelconque des revendications 1 à 5,
dans lequel les parties de tubes en soufflet (3, 6) sont respectivement agencées entre les parties d'une pluralité de parties de tube rectiligne (2, 5), et les colliers (4) sont prévus sur les parties de tube rectiligne requises (2, 5).
